# EUROPÄISCHE PATENTSCHRIFT

(11) **EP 1 935 912 B1**
(45) Veröffentlichungstag und Bekanntmachung des Hinweises auf die Patenterteilung: **17.03.2010**
(21) Anmeldenummer: 07023700.3
(22) Anmeldetag: 07.12.2007
(51) Int. Cl.: C08G 18/40

(54) **Verfahren zur Herstellung von PIPA-Polyolen zur Herstellung von hochelastischen Polyurethan-Weichschaumstoffen**
Method for manufacturing PIPA-polyols in order to manufacture high-elasticity polyurethane soft foam material
Procédé destiné à la fabrication de polyols PIPA destinés à la fabrication de mousses souples de polyuréthane hautement élastiques

(30) Priorität: 20.12.2006 DE 102006060376
(43) Veröffentlichungstag der Anmeldung: 25.06.2008
(73) Patentinhaber: Bayer MaterialScience AG, 51368 Leverkusen (DE)
(72) Erfinder: Haas, Peter, Dr., 42781 Haan (DE); Klesczewski, Bert, Dr., 51069 Köln (DE); Meyer-Ahrens, Sven, Dr., 51375 Leverkusen (DE)

(56) Entgegenhaltungen:
- WO-A-00/73364
- WO-A-94/20558
- WO-A-2006/040251
- WO-A-2007/045372

## Beschreibung

Der Gegenstand der vorliegenden Erfindung betrifft ein Verfahren zur Herstellung von PIPA-Polyolen, die PIPA-Polyole selber sowie ein Verfahren zur Herstellung von hochelastischen Polyurethan-Weichschäumen.

Zur Herstellung von weichen Polyurethan(PUR)-Schaumstoffen mit hoher Elastizität werden als Polyetherpolyole modifizierte langkettige Polyole verwendet, die sich in drei Stoffklassen einteilen lassen:
1. SAN-PE- Dispersionen, die durch Pfropfung von Polyethern (PE) mit geeigneten Monomeren wie Styrol und Acrylnitril erhalten werden,
2. Polyharnstoff- (PHD)- Dispersionen, die durch Additionsreaktion von Isocyanaten und Diaminen in Gegenwart der PE erhalten werden,
3. Polyisocyanat-Polyadditions-Polyol - (PIPA)- Dispersionen, die durch Addition von Alkanolaminen wie dem Triethanolamin und Isocyanaten in Gegenwart der PE erhalten werden.

Die hieraus hergestellten Schaumstoffe mit einem Füllstoffgehalt von 10 Gew.-% auf der Polyolseite weisen bei einer Rohdichte von 30 kg/m³ eine Stauchhärte von max. 3,0 kPa auf, ein Füllstoffgehalt von 20 Gew.-% führt hier zu Stauchhärten von ca. 4 kPa nach DIN 53577 bei 40% Stauchung.

In DE-A 198 11 471 werden Polyharnstoffdispersionen beschrieben, die aus Monoaminen und einem weiteren Amin durch Umsetzung mit Isocyanaten in einem PE erhalten werden. Diese weisen bei Füllgraden um 9,9 Gew.-% von 4300 mPa.s, bei 7,7 Gew.-% von 2100 bis 2800 mPa.s/25°C auf und führen zu Schaumstoffen mit guter Offenzelligkeit.

Die Aufgabe der vorliegenden Erfindung ist daher ein Verfahren bereit zustellen, das es ermöglicht Polyisocyanat-Polyadditions-Polyole mit niedriger Viskosität bereit zustellen, die zur Herstellung von Schaumstoffen mit hoher Elastizität und hoher Härte bei niedrigen Füllstoffgehalten geeignet sind.

Diese Aufgabe wird gelöst durch ein Verfahren zur Herstellung von Polyisocyanat-Polyadditions-Polyolen (PIPA-Polyolen), bei dem Polyisocyanate mit mindestens einem sekundären Amin mit mindestens einer Hydroxylgruppe im Molekül, aus der Gruppe von Diisopropanolamin und Methylethanolamin, und mit einer Verbindung mit mindestens zwei gegenüber Isocyanaten reaktionsfähigen Wasserstoffatomen mit einem Molekulargewicht im Bereich von 500 bis 10000 g/mol sowie gegebenenfalls Katalysatoren umgesetzt werden.

Dabei handelt es sich im Rahmen der Erfindung bei dem sekundären Amin mit mindestens einer Hydroxylgruppe im Molekül und der Verbindung mit mindestens zwei gegenüber Isocyanaten reaktionsfähigen Wasserstoffatomen mit einem Molekulargewicht im Bereich von 500 bis 10000 g/mol um unterschiedliche Verbindungen.

Vorteilhaft ist das erfindungsgemäße Verfahren zur Herstellung von Polyisocyanat-Polyadditions-Polyolen, wenn in Gegenwart von Zinnverbindungen als Katalysator gearbeitet wird.

Ein weiterer Gegenstand der vorliegenden Erfindung sind Polyisocyanat-Polyadditions-Polyole erhältlich nach dem erfindungsgemäßen Verfahren.

Ein weiterer Gegenstand der vorliegenden Erfindung ist ein Verfahren zur Herstellung von elastischen Polyurethan-Weichschäumen durch Umsetzung von
A) Polyisocyanaten
B) den erfindungsgemäßen Polyisocyanat-Polyadditions-Polyolen
C) gegebenenfalls Alkanolaminvernetzern der allgemeinen Formel

   HₘN[(CH₂-CXH-O)ₙH]₃₋ₘ

   in welcher
   m eine ganze Zahl zwischen 0 bis 2
   n eine ganze Zahl zwischen 1 bis 3
   X Wasserstoff oder eine Methylgruppe
   bedeutet,
D) gegebenenfalls weiteren Verbindungen mit mindestens zwei gegenüber Isocyanaten reaktionsfähigen Wasserstoffatomen und einem Molekulargewicht von 32 bis 499 g/mol
E) Wasser und/oder leicht flüchtigen organischen Treibmitteln
F) Katalysatoren der Treib- und Vernetzungsreaktion
G) Stabilisatoren
H) gegebenenfalls weiteren bekannten Hilfs- und Zusatzstoffen.

Dabei handelt es sich im Rahmen der Erfindung bei den Alkanolaminvernetzern C) und den Verbindungen mit mindestens zwei gegenüber Isocyanaten reaktionsfähigen Wasserstoffatomen mit einem Molekulargewicht im Bereich von 32 bis 499 g/mol um unterschiedliche Verbindungen.

Ein weiterer Gegenstand der Erfindung sind elastische Polyurethan-Weichschäume erhältlich nach dem erfindungsgemäßen Verfahren.

Ein weiterer Gegenstand der Erfindung ist die Verwendung von den erfindungsgemäßen elastischen Polyurethan-Weischäumen zur Herstellung von Polstermaterial für Möbel und/oder Matratzen.

Die erfindungsgemäßen PIPA-Polyole führen nach üblicher Umsetzung zu PUR -Schaumstoffen mit überraschend hoher Härte bei niedrigen Füllstoffgehalten und hohen Elastizitäten.

Als Isocyanate sowohl für die PIPA-Polyolherstellung als auch bei der Umsetzung der PIPA-Polyole zu Polyurethan-Weichschäumen (Komponente A) können alipahtische, cycloaliphatische, araliphatische, aromatische und heterocyclische Polyisocyanate, wie z. B. von W. Siefken in Justus Liebigs Annalen der Chemie, 562, Seite 75-136, beschrieben, eingesetzt werden. Dies sind beispielsweise solche der Formel

Q(NCO)n,

in der
n 2 bis 4, vorzugsweise 2 und
Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen bedeutet, z.B. solche Polyisocyanate, wie sie in der DE-OS 28 32 253, Seiten 10 bis 11, beschrieben sind.

Besonders bevorzugt werden in der Regel die technisch leicht zugänglichen nicht weiter modifzierten Polyisocyanate, z.B. das 2,4- und 2,6-Toluylen-diisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI"). Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten, können mitverwendet werden. Ihre Anwesenheit ist jedoch nicht verfahrensspezifisch.

Zur Herstellung der PIPA-Polyole (Komponente B) müssen sekundäre Amine mit wenigstens einer Hydroxylgruppe im Molekül eingesetzt werden. Die sekundären Amine mit mindestens einer Hydroxylgruppe im Molekül sind ausgewählt aus der Gruppe von N-Methylethanolamin und Diisopropanolamin. Wie bereits in DE-A 102005050701 gezeigt, führt der Einsatz von Diethanolamin und Aminoethylethanolamin zu niedrigeren Stauchhärten, die bei einer Rohdichte von 30 kg/m³ bei 2 kPa liegen.

Die Verbindungen, die zur Herstellung der PIPA-Polyole mindestens zwei gegenüber Isocyanaten reaktionsfähigen Wasserstoffatomen aufweisen und ein Molekulargewicht im Bereich von 500 bis 10000 besitzen, sind Polyetherpolyole (Poly(oxyalkylen)polyole) mit einer Funktionalität im Bereich von 2 bis 6 und einem zahlenmittleren Molekulargewicht von 1.000 bis 10.000 g/mol. Es können jedoch auch Gemische solcher Polyole eingesetzt werden.

Die erfindungsgemäß eingesetzten Poly(oxyalkylen)polyole können z.B. durch Polyaddition von Alkylenoxiden an polyfunktionelle Startverbindungen in Gegenwart von basischen Katalysatoren hergestellt werden. Bevorzugte Starterverbindungen sind Wasser sowie Moleküle mit zwei bis sechs Hydroxylgruppen pro Molekül wie Triethanolamin, 1,2-Ethandiol, 1,2-Propandiol, 1,3 Propandiol, Diethylenglykol, Dipropylenglykol, Triethylenglykol, Tripropylenglykol, 1,2-Butandiol, 1,3-Butandiol, 1,4-Butandiol, 1,2-Hexandiol, 1,4-Hexandiol, 1,5-Hexandiol, 1,6-Hexandiol, Glycerol, Trimethylolpropan, Pentaerythrit, Mannit oder Sorbit.

Bevorzugt zur Herstellung der erfindungsgemäß eingesetzten Poly(oxyalkylen)polyole verwendete Alkylenoxide sind Oxiran, Methyloxiran und Ethyloxiran. Diese können allein oder im Gemisch verwendet werden. Bei Verwendung im Gemisch ist es möglich, die Alkylenoxide statistisch oder blockweise oder beides nacheinander umzusetzen. Näheres ist "Ullmanns Encyclopädie der industriellen Chemie", Band A 21, 1992, Seite 670 f. zu entnehmen. Bevorzugt weisen die Polyetherpolyole für die Herstellung der PIPA-Polyole primäre OH-Gruppen auf.

Gegebenenfalls können bei der Herstellung von Polyurethan-Weichschäumen auch noch Alkanolaminvernetzer (Komponente C) der allgemeinen Formel

HₘN[(CH₂-CXH-O)ₙH]₃₋ₘ

in welcher
m eine ganze Zahl zwischen 0 bis 2
n eine ganze Zahl zwischen 1 bis 3 und
X Wasserstoff oder eine Methylgruppe bedeutet, eingesetzt werden.

Besonders bevorzugt sind Verbindungen wie Diisopropanolamin, Triisopropanolamin, Triethanolamin, Diethanolamin, 2-Hydroxyethyl-2-hydroxypropylamin und Bis(2-hydroxyethoxyethyl)-amin oder deren Gemische zu verstehen.

Als weitere Verbindungen mit mindestens zwei gegenüber Isocyanaten reaktionsfähigen Wasserstoffatomen und einem Molekulargewicht von 32 bis 499 g/mol (Komponente D) sind Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf, Beispiele hierfür werden in der DE-OS 2 832 253, Seiten 19-20, beschrieben.

Zur Herstellung von Polyurethan-Weichschäumen muss in der Zusammensetzung aus den Komponenten A bis D auch noch ein Treibmittel (Komponente E) vorhanden sein. Als Komponente E) wird vorzugsweise Wasser als chemisches Treibmittel eingesetzt, das durch Reaktion mit Isocyanatgruppen Kohlendioxid als Treibgas liefert. Bevorzugt wird Wasser in einer Menge von 1,0 bis 6,0 Gew.-%, bevorzugt 1,5 bis 5,5 Gew.-% , bezogen auf die Summe der Mengen an Komponenten B)+C)+D), eingesetzt. In Komponente D) können auch nicht brennbare physikalische Treibmittel wie Kohlendioxid, insbesondere in flüssiger Form, verwendet werden. Prinzipiell können auch Treibmittel aus der Klasse der Kohlenwasserstoffe wie C₃-C₆-Alkane, z.B. Butane, n-Pentan, iso-Pentan, cyclo-Pentan, Hexane o.ä. oder halogenierte Kohlenwasserstoffe wie Dichlormethan, Dichlormonofluormethan, Chlordifluorethane, 1,1-Dichlor-2,2,2-Trifluorethan, 2,2-Dichlor-2-fluorethan, insbesondere chlorfreie Fluorkohlenwasserstoffe wie Difluormethan, Trifluormethan, Difluorethan, 1,1,1,2-Tetrafluorethan, Tetrafluorethan (R 134 oder R 134a), 1,1,1,3,3- Pentafluorpropan (R 245 fa), 1,1,1,3,3,3- Hexafluorpropan (R 256), 1,1,1,3,3-Pentafluorbutan (R 365 mfc), Heptafluorpropan oder auch Schwefelhexafluorid verwendet werden. Auch Gemische dieser Treibmittel sind verwendbar.

Des Weiteren sind in der Zusammensetzung für die Herstellung von Polyurethan-Weichschaumstoffen auch Katalysatoren für die Treib- und Vernetzungsreaktion enthalten (Komponente F). Katalysatoren F) der an sich bekannten Art, sind z.B. tertiäre Amine, wie Triethylamin, Tributylamin, N-Methylmorpholin, N-Ethyl-morpholin, N,N,N',N'-Tetramethyl-ethylendiamin, Pentamethyl-diethylentriamin und höhere Homologen (DE-A 2 624 527 und 2 624 528), 1,4-Diazabicyclo-(2,2,2)-octan, N-Methyl-N'-dimethylaminoethylpiperazin, Bis-(dimethylaminoalkyl)-piperazine, N,N-Dimethylbenzylamin, N-N-Dimethylcyclohexylamin, N,N-Diethylbenzylamin, Bis-(N,N-diethylaminoethyl)-adipat, N,N,N',N'-Tetramethyl-1,3-butandiamin, N,N-Dimethyl-β-phenylethylantin, 1,2-Dimethylimidazol, 2-Methylimidazol, monocyclische und bicyclische Amidine sowie Bis-(dialkylamino)-alkyl-ether wie 2,2-Bis(dimethyl-aminoethyl)-ether.

Als Katalysatoren bei der Herstellung der PIPA-Polyolen können auch organische Metallverbindungen, insbesondere organische Zinnverbindungen, verwendet werden. Als organische Zinnverbindungen kommen neben schwefelhaltigen Verbindungen wie Di-n-octyl-zinnmercaptid vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen z.B. Dibutylzinnoxid, Dibutylzinndichlorid, Dibutylzinndiacetat, Dibutylzinndilaurat, Dibutylzinnmaleat oder Dioctylzinndiacetat in Betracht.

Zusätzliche Beispiele von gegebenenfalls erfindungsgemäß mitzuverwendenden Komponenten F), weiteren Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und baktereostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl Hanser Verlag, München 1993, 3. Auflage, z.B. auf den Seiten 104 bis 127 beschrieben.

Bei der Umsetzung der PIPA-Polyole zu Polyurethan-Weichschaumstoffen werden auch Stabilisatoren (Komponente G) und weitere Hilfs- und Zusatzstoffe (Komponente H) eingesetzt. Als bevorzugte Stabilisatoren sind vor allem Polyethersiloxane, bevorzugt wasserunlösliche Vertreter zu nennen. Diese Verbindungen sind im allgemein so aufgebaut, dass ein kurzkettiges Copolymerisat aus Ethylenoxid und Propylenoxid mit einem Polydimethylsiloxanrest verbunden ist. Derartige Schaumstabilisatoren sind z.B. in den US-PS 2 834 748, 2 917 480 und 3 629 308 sowie US-PS 2 917 480 beschrieben. Als Hilfs- und Zusatzstoffe werden beispielsweise Trikresylphosphat, Tris(2-chlorethyl)phosphat, Tris(2-chlorpropyl)phosphat, Tris(2,3-dibrompropyl)phosphat, Tetrakis(2-chlorethyl)ethylendiphosphat, Dimethylmethanphosphonat, Diethanolaminomethylphosphonsäurediethylester, Tris(dipropylenglykol)phosphit, Tris(dipropylenglykol)phosphat, Bis(2-hydroxyethyl)ethylenglycoldiphosphat-bis(2-chlorethylester) sowie halogenhaltige, flammschützend wirkende Polyole verwendet. Weitere Beispiele von gegebenenfalls mitzuverwendenden Komponenten H) sind Zellregler, Reaktionsverzögerer, Stabilisatoren gegen Verfärbungen und Oxidationen, Weichmacher, Farbstoffe und Füllstoffe sowie fungistatisch und bakteriostatisch wirksame Substanzen. Diese werden meist der Polyolkomponente in Mengen von 0 bis 10 Gewichtsteilen, bevorzugt 2 bis 6 Gewichtsteilen zugesetzt. Einzelheiten über Verwendungs- und Wirkungsweise dieser Zusatzmittel sind in G. Oertel (Hrsg): "Kunststoff-Handbuch", Band VII, Carl Hanser Verlag, 3. Auflage, München 1993, Seite 110-115 beschrieben.

Zur Herstellung von Polyurethan-Weichschäumen werden die Reaktionskomponenten erfindungsgemäß nach dem an sich bekannten Einstufenverfahren, dem Präpolymerverfahren oder Semipräpolymerverfahren zur Umsetzung gebracht, wobei man sich oft maschineller Einrichtungen bedient, z.B. solcher, die in der US-PS 27 64 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl Hanser Verlag, München 1966, z.B. auf den Seiten 121 bis 205 beschrieben.

Die Umsetzung erfolgt in der Regel in einem Kennzahlbereich von 90 bis 130.

Bei Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz in Frage.

In der Form schäumt das schaumfähige Reaktionsgemisch auf und bildet den Formkörper. Die Formverschäumung kann dabei so durchgeführt werden, dass das Formteil an seiner Oberfläche Zellstruktur aufweist. Sie kann aber auch so durchgeführt werden, dass das Formteil eine Kompakte Haut und einen zelligen Kern erhält. Erfindungsgemäß kann man in diesem Zusammenhang, so vorgehen, dass man in die Form so viel schaumfähiges Reaktionsgemisch einträgt, dass der gebildete Schaumstoff die Form gerade ausfüllt.

Man kann aber auch so arbeiten, dass man mehr schaumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den US-PS 31 78 490 und 31 82 104 bekannt.

Bei der Formverschäumung werden vielfach an sich bekannte "äußere Trennmittel" wie Siliconöle, mitverwendet. Man kann aber auch so genannte "innereTrennmittel" gegebenenfalls im Gemisch mit äußeren Trennmitteln, verwenden. Wie sie z.B. aus den DE-OS 21 21 670 und 23 07 589 bekannt geworden sind.

Bevorzugt werden aber die Schaumstoffe durch Blockverschäumung hergestellt.

### Beispiele

### Herstellung der PIPA-Polyole

Die Einzelkomponenten zur Herstellung der PIPA-Polyole wurden über einen Hochdruckmischkopf dosiert und anschließend der Reaktion überlassen.

### 1. PIPA-Polyol

Aus 95,33 Teile eines Polyetherpolyols der OH-Zahl 35 , hergestellt durch Addition von Propylenoxid und Ethylenoxid im Verhältnis 82,5 zu 17,5 an Trimethylolpropan als Starter und 4,67 Gew.-Teile Diisopropanolamin sowie 3,06 Gew.-Teile Desmodur T 65;
Nach Stehen über Nacht ergibt sich:
OH-Zahl: 55,9. Visk.: 2680 mPa.s/25°C; Konz. von Harnstoff in der Dispersion: 7,5 Gew. %:

### 2. PIPA-Polyol

Aus 95,07 Gew.-Teilen des Polyetherpolyols nach Beispiel 1, 0,03 Gew.-Teilen Dibutylzinndilaurat, 4,9 Gew.-Teilen N-Methylethanolamin und 5,67 Gew.-Teilen Desmodur T 65. Nach Stehen über Nacht ergibt sich:
OH-Zahl: 57,5, Visk.: 2670 mPa.s/25°C; Konz. von Harnstoff im PIPA-Polyol: 10,0 Gew. % ;
In für die Herstellung von Weichschaumstoffen üblichen Verarbeitung nach dem Einstufenverfahren werden zur Reaktion gebracht:

**Folgende Produkte werden in den Beispielen verwendet:**

| | |
|---|---|
| Tegostab^{®} B 8681: | Schaumstabilisator auf Polysiloxan-Polyether-Basis (Goldschmidt) |
| Niax^{®} A1: | Bis(2-dimethylamino)ethylether in Dipropylenglycol (GE Speciality Chemicals) |
| Dabco^{®} 33LV: | 33% Triethylendiamin, 67% Dipropylenglycol (Air Products) |
| Desmorapid^{®} SO: | Zinn 2-Ethylhexanoat (Rheinchemie) |
| Desmodur^{®} T 80: | Gemisch aus 2,4 und 2,6 TDI (80:20) mit einem NCO-Gehalt von 48 Gew.-% |
| Desmodur^{®} T65: | Gemisch aus 2,4 und 2,6 TDI (65:35) mit einem NCO-Gehalt von 48 Gew.-% |
| DBTDL: | Dibutylzinndilaurat |

### II) Verschäumungsbeispiele

### Beispiel 1

| | |
|---|---|
| PIPA-Polyol 1 | 100 Gew.-Teile |
| Tegostab^{®} B 8681 | 0,5 Gew.- Teile |
| Niax^{®} A1 | 0,15 Gew.- Teile |
| Dabco^{®} 33LV | 0,1 Gew.- Teile |
| Desmorapid^{®} SO | 0,1 Gew.- Teile |
| Wasser | 3,0 Gew.- Teile |
| Desmodur^{®} T 80 | 10,25 Gew.- Teile |
| Desmodur^{®} T65 | 30,75 Gew.- Teile |
| Index | 108 |
| Rohdichte | 29 kg/m3 |
| Stauchhärte, (40% Komp.) | 3,7 kPa |

### Beispiel 2

| | |
|---|---|
| PIPA-Polyol 2 | 100 Gew.- Teile |
| Tegostab^{®} B 8681 | 0,5 Gew.- Teile |
| Niax^{®} A1 | 0,1 Gew.- Teile |
| DBTDL | 0,05 Gew.- Teile |
| Wasser | 2,0 Gew.- Teile |
| Desmodur^{®} T65 | 30,58 Gew.- Teile |
| Index | 108 |
| Rohdichte | 46 kg/m3 |
| Stauchhärte(40% Komp.) | 4,9 kPa |
| Rückprallelastizität | 62% |

### Beispiel 3

| | |
|---|---|
| PIPA-Polyol 2 | 100 Gew.- Teile |
| Tegostab^{®} B 8681 | 0,3 Gew.- Teile |
| Niax^{®} A1 | 0,15 Gew.- Teile |
| DBTDL | 0,1 Gew.- Teile |
| Wasser | 3,0 Gew.- Teile |
| Desmodur^{®} T65 | 41,0 Gew.- Teile |
| Index | 108 |
| Rohdichte | 30,5 kg/m3 |
| Stauchhärte(40% Komp.) | 4,2 kPa |
| Rückprallelastizität | 52% |

Die durch Verschäumung der erfindungsgemäßen PIPA-Polyole erhaltenen Schaumstoffe zeigen bei niedrigen Füllstoffgehalten eine überraschend hohe Härte bei guten Elastizitätswerten. So ergibt das PIPA-Polyol 1 mit 7,5% Füllstoff bei Rohdichte 29 kg/m³ eine Härte von 3,7 kPa, während mit den 10%igen PIPA-Polyolen 2 bei Rohdichte 30,5 kg/m³ eine Härte von 4,2 kPa und bei RD 46 kg/m³ eine Härte von 4,9 kPa erhalten wird.
Mit einem vergleichbaren Füllstoffgehalt von 10% Füllstoffdispersion auf der Basis von SAN-, PHD- oder Urethandispersionen werden bei Rohdichte 30 kg/m³, Härten von ca. 3,0 kPa und bei Rohdichten um 42 kg/m³ mit SAN-oder PHD - Dispersionen Härten um 4 kPa erreicht.

## Patentansprüche

1. Ein Verfahren zur Herstellung von Polyisocyanat-Polyadditions-Polyolen (PIPA-Polyolen), bei dem Polyisocyanate mit mindestens einem sekundären Aminen mit mindestens einer Hydroxylgruppe im Molekül, aus der Gruppe von Diisopropanolamin und Methylethanolamin in Gegenwart einer Verbindung mit mindestens zwei gegenüber Isocyanaten reaktionsfähigen Wasserstoffatomen mit einem Molekulargewicht im Bereich von 500 bis 10000 g/mol sowie gegebenenfalls Katalysatoren umgesetzt werden.

2. Das Verfahren zur Herstellung von Polyisocyanat-Polyadditions-Polyolen nach Anspruch 1, wobei in Gegenwart von Zinnverbindungen als Katalysator gearbeitet wird.

3. Polyisocyanat-Polyadditions-Polyole erhältlich nach dem Verfahren nach einem der Ansprüche 1 bis 2.

4. Verfahren zur Herstellung von elastischen Polyurethan-Weichschäumen durch Umsetzung von
A) Polyisocyanaten
B) Polyisocyanat-Polyadditions-Polyolen nach Anspruch 3
C) gegebenenfalls Alkanolaminvernetzern der allgemeinen Formel
HₘN[(CH₂-CXH-O)ₙH]₃₋ₘ
in welcher
m eine ganze Zahl zwischen 0 bis 2
n eine ganze Zahl zwischen 1 bis 3
X Wasserstoff oder eine Methylgruppe
bedeutet,
D) gegebenenfalls weiteren Verbindungen mit mindestens zwei gegenüber Isocyanaten reaktionsfähigen Wasserstoffatomen und einem Molekulargewicht von 32 bis 499 g/mol
E) Wasser und/oder leicht flüchtigen organischen Treibmitteln
F) Katalysatoren der Treib- und Vernetzungsreaktion
G) Stabilisatoren
H) gegebenenfalls weiteren bekannten Hilfs- und Zusatzstoffen.

5. Elastische Polyurethan-Weichschäume erhältlich nach dem Verfahren nach Anspruch 4.

6. Verwendung von elastischen Polyurethan-Weichschäumen nach Anspruch 5 zur Herstellung von Polstermaterial für Möbel und/oder Matratzen.

## Claims

1. A process for the preparation of polyisocyanate polyaddition polyols (PIPA polyols), in which polyisocyanates are reacted with at least one secondary amine having at least one hydroxyl group in the molecule, from the group consisting of diisopropanolamine and methylethanolamine, in the presence of a compound having at least two hydrogen atoms which are reactive towards isocyanates and a molecular weight in the range of from 500 to 10,000 g/mol and optionally catalysts.

2. The process for the preparation of polyisocyanate polyaddition polyols according to claim 1, wherein the process is carried out in the presence of tin compounds as the catalyst.

3. Polyisocyanate polyaddition polyols obtainable by the process according to one of claims 1 to 2.

4. Process for the production of elastic flexible polyurethane foams by reaction of
A) polyisocyanates
B) the polyisocyanate polyaddition polyols according to claim 3
C) optionally alkanolamine crosslinking agents of the general formula
HₘN[(CH₂-CXH-O)ₙH]₃₋ₘ
in which
m denotes an integer between 0 to 2
n denotes an integer between 1 to 3
X denotes hydrogen or a methyl group,
D) optionally further compounds having at least two hydrogen atoms which are reactive towards isocyanates and a molecular weight of from 32 to 499 g/mol
E) water and/or readily volatile organic blowing agents
F) catalysts of the blowing and crosslinking reaction
G) stabilizers
H) optionally further known auxiliary substances and additives.

5. Elastic flexible polyurethane foams obtainable by the process according to claim 4.

6. Use of elastic flexible polyurethane foams according to claim 5 for the production of cushioning material for furniture and/or mattresses.

## Revendications

1. Procédé pour produire des polyisocyanate-polyadditions-polyols (PIPA-Polyols) où des polyisocyanates sont mis à réagir avec au moins une amine secondaire ayant au moins un groupe hydroxyle dans la molécule, du groupe de la diisopropanolamine et de la méthyléthanolamine, en présence d'un composé ayant au moins deux atomes d'hydrogène réactifs à l'égard des isocyanates ayant une masse moléculaire dans le domaine de 500 à 10 000 g/mol et éventuellement des catalyseurs.

2. Procédé de production de polyisocyanate-polyadditions-polyols selon la revendication 1 où on opère en présence de composés de l'étain comme catalyseur.

3. Polyisocyanate-polyadditions-polyols pouvant être obtenus selon le procédé selon l'une des revendications 1 à 2.

4. Procédé de production de mousses souples de polyuréthane étatiques par réaction
A) de polyisocyanates
B) de polyisocyanate-polyadditions-polyols selon la revendication 3
C) éventuellement d'agents de réticulation de type alcanolamine de formule générale
HₘN[(CH₂-CXH-O)ₙH]₃₋ₘ
où
m représente un nombre entier entre 0 et 2
n représente un nombre entier entre 1 et 3
X représente l'hydrogène ou un groupe méthyle
D) éventuellement d'autres composés ayant au moins deux atomes d'hydrogène réactifs à l'égard des isocyanates et une masse moléculaire de 32 à 499 g/mol
E) d'eau et/ou d'agents moussants organiques volatils
F) de catalyseurs de la réaction de moussage et de réticulation
G) de stabilisants
H) éventuellement d'autres adjuvants et additifs connus.

5. Mousses souples de polyuréthane élastiques pouvant être obtenues selon le procédé selon la revendication 4.

6. Utilisation de mousses souples de polyuréthane élastiques selon la revendication 5 pour la production de matériaux de rembourrage pour meubles et/ou matelas.
